Europäisches Patentamt

European Patent Office

Office européen des brevets

(11) Veröffentlichungsnummer: **0 000 161**
**B1**

# EUROPÄISCHE PATENTSCHRIFT

(45) Veröffentlichungstag der Patentschrift: **20.05.81**

(21) Anmeldenummer: **78100179.7**

(22) Anmeldetag: **16.06.78**

(51) Int. Cl.³: **C 08 F 26/06, C 08 F 6/10 //C08F226/06, (C08F226/06, 226/10, 218/04)**

(54) Verfahren zur Reduzierung der Restmonomerengehalte bei der Polymerisation von Vinyllactamen und Vinylestern.

(30) Priorität: **02.07.77 DE 2730017**

(43) Veröffentlichungstag der Anmeldung:
**10.01.79 Patentblatt 79/1**

(45) Bekanntmachung des Hinweises auf die Patenterteilung:
**20.05.81 Patentblatt 81/20**

(84) Benannte Vertragsstaaten:
**DE FR GB**

(56) Entgegenhaltungen:
**US - A - 2 665 271**
**US - A - 2 667 473**
**US - A - 3 534 009**

(73) Patentinhaber: **BASF Aktiengesellschaft
Carl-Bosch-Strasse 38
D-6700 Ludwigshafen (DE)**

(72) Erfinder: **Straub, Ferdinand, Dr.
Ziegelstrasse 20
D-6832 Hockenheim (DE)**
Erfinder: **Spoor, Herbert, Dr.
Woogstrasse 44
D-6703 Limburgerhof (DE)**
Erfinder: **Schenck, Hans-Uwe, Dr.
Erlenweg 6
D-6706 Wachenheim (DE)**
Erfinder: **Schwarz, Wolfgang, Dr.
Benzstrasse 33
D-6700 Ludwigshafen (DE)**

Courier Press, Leamington Spa, England.

Verfahren zur Reduzierung der Restmonomerengehalte bei der Polymerisation von Vlnyllactamen und Vinylestern

Die Erfindung betrifft ein Verfahren zur Reduzierung der Restmonomerengehalte bei der Polymerisation von Vinylestern und Vinyllactamen in einem Lösungsmittel durch Zusatz von Polymerisationsinitiatoren im Anschluß an die Hauptpolymerisation und Nachpolymerisieren des Reaktionsgemisches.

Bei Polymerisationsreaktionen bleiben bekanntlich geringe Mengen an Monomeren unumgesetzt. Besonders die Polymeren, die im kosmetisch-pharmazeutischen Anwendungsbereich eingesetzt werden, sollten aber extrem niedrige Restmonomerengehalte haben. Pulverförmige Polymerisate, die beispielsweise durch Sprühtrocknen der Polymerisatlösungen erhalten werden, enthalten im allgemeinen nur geringe Mengen an Restmonomeren. Wenn man aber für die Anwendung bereits Polymerisatlösungen einsetzen möchte, so ist es beispielsweise nicht möglich, die nicht polymerisierten Monomeren durch Destillation weitgehend zu entfernen. Aus der Polymerisatlösung kann zwar ein pulverförmiges Polymerisat durch Sprühtrocknung gewonnen und anschließend wieder im reinen Lösungsmittel gelöst werden. Dieses Verfahren ist jedoch umständlich und führt beispielsweise bei Polyvinyllactamen nicht zu Polymerisaten, die einen sehr geringen Restmonomerengehalt aufweisen.

Aus der US-PS 2 665 271 ist ein Verfahren zum Polymerisieren von N-Vinyllactamen bekannt, bei dem man N-Vinyllactame zunächst nach bekannten Verfahren mit Hilfe von anorganischen oder organischen Peroxiden, die unter den Reaktionsbedingungen zerfallen, als Initiatoren polymerisiert und das Reaktionsgemisch einer Nachpolymerisation unterwirft, sobald der Monomerengehalt konstant bleibt. Die Nachpolymerisation wird in der Weise durchgeführt, daß man dem Reaktionsgemisch weiteres Peroxid zusetzt und es erhitzt. Der Monomerengehalt beträgt nach der Hauptpolymerisation etwa 6% und kann durch Nachpolymerisieren des Reaktionsgemisches auf einen Wert von etwa 0,9% gesenkt werden.

Aufgabe der Erfindung ist es, ein Verfahren zur Reduzierung der Restmonomerengehalte bei der Polymerisation von Vinylestern und Vinyllactamen in einem Lösungsmittel durch Zusatz von Polymerisationinitiatoren im Anschluß an die Hauptpolymerisation und Nachpolymerisation des Reaktionsgemisches aufzuzeigen, bei dem man Polymerisatlösungen erhält, die einen sehr niedrigen Gehalt an restlichen Monomeren aufweisen.

Die Aufgabe wird erfindungsgemäß dadurch gelöst, daß man die Hauptpolymerisation bei Temperaturen von 40 bis 160°C durchführt, dem Reaktionsgemisch nach Beendigung der Hauptpolymerisation 0,05 bis 0,5 Gew.%, bezogen auf die eingesetzten Monomeren, Di-tert.-butylperoxid, Di-tert.-amylperoxid, Dicumylperoxid, 2,5-Dimethyl-2,5-bis-(tert.-butylperoxy)-hexan, 2,2-Bis-(tert.-butylperoxy)-butan, 1,1-Bis-(tert.-butylperoxy)-3,3,5-trimethylcyclohexan oder 4,4-Di-(tert.-butylperoxy)-butylvalerat zusetzt, und die Nachpolymerisation bei höherer Temperatur als die Hauptpolymerisation im Bereich von 100 bis 200°C durchführt.

Der Vorteil des erfindungsgemäßen Verfahrens besteht darin, daß der gewünschte Polymerisationsgrad und die Farbe der Produkte nicht nachteilig beeinflußt werden. Es ist überraschend, daß durch die Auswahl von Dialkylperoxiden und Perketalen als Polymerisationsinitiator bei der Nachpolymerisation Polymerisatlösungen erhalten werden, bei denen der Restmonomerengehalt um den Faktor 10 bis 20 niedriger liegt als bei Polymerisatlösungen, die nach bekannten Verfahren hergestellt werden.

Als Vinyllactame kommen vor allem N-Vinylpyrrolidon, N-Vinylpiperidon und N-Vinylcaprolactam in Betracht. Nach dem erfindungsgemäßen Verfahren ist es möglich, Polymerisatlösungen eines niedrigen Restmonomerengehaltes von Homo- und Copolymerisaten von N-Vinyllactamen herzustellen. Das Verfahren hat besondere Bedeutung für die Herstellung von Copolymerisaten von Vinyllactamen, insbesondere von Copolymerisaten des N-Vinylpyrrolidons. Geeignete Monomere, die mit N-Vinylpyrrolidon copolymerisierbar sind, sind beispielsweise Vinylester gesättigte Fettsäuren, die 2 bis 20 Kohlenstoffatome enthalten, z.B. Vinylacetat, Vinylpropionat, Vinylbutyrat, Vinylisobutyrat, Vinyllactat, Vinylcaproat, Vinylcaprylat, Vinyloleat und Vinylstearat, Acrylester und Methacrylsäureester, die sich von Alkoholen mit 1 bis 12 Kohlenstoffatomen ableiten, z.B. Acrylsäuremethylester, Acrylsäureäthylester, Acrylsäureisobutylester und 2-Äthylhexyl-acrylat sowie Acrylester oder Methacrylester, die sich von basischen Monomeren, z.B. Aminoäthanol oder Aminopropanol ableiten und Acrylamid sowie N-Methylolacrylamide und N-Methylolmethacrylamid.

Technisch besonders interessante Copolymerisate enthalten beispielsweise 10 bis 90 Gew.% Vinyllactam und 90 bis 10 Gew.% eines Vinylesters, vorzugsweise Vinylacetat oder Vinylpropionat. Die Vinyllactame können auch mit mehreren Comono-meren copolymerisiert werden, beispielsweise mit Vinylacetat und Vinylisobutyrat oder mit Vinylacetat und Acrylsäureäthylester. Vorzugsweise werden Copolymerisate aus N-Vinylpyrrolidon hergestellt, die 80 bis 20 Gew.% Vinylacetat enthalten.

Die Monomeren werden in den bekannten Lösungsmitteln polymerisiert. Es handelt sich hierbei um Lösungsmittel, in denen die Monomeren bzw. Monomerengemische löslich sind. Geeignet sind als Lösungsmittel beispielsweise Wasser, Alkohole, Kohlenwasserstoff, Halogenkohlenwasserstoffe, Ester, Ketone und Äther. Beispiele für einzelne Vertreter aus den genannten Klassen sind beispielsweise Methanol, Äthanol, n- und iso-Propanol, Cyclopentanol, Cyclohexanol, Methylenchlorid, 1,1,1-Trichloräthan, 1,1,2-Trifluoräthan, 1,1,2-Trichloräthan, Athylenglykol, Propandiol, Butandiol, Hexylenglykol, Methylacetat, Äthylacetat, Benzylacetat, Aceton, Äthylenglykolmonomethyläther und Äthylenglykolmonoäthyläther. Man kann selbstverständlich auch Mischungen der genannten Lösungsmittel einsetzen, z.B. Mischungen aus Wasser und Isopropanol oder Mischungen aus Isopropanol und Aceton. Die Konzentration des Polymerisats in der Lösung beträgt im allgemeinen zwischen 5 und 95%.

Für die Hauptpolymerisationsphase können die üblichen radikalischen Polymerisationsinitiatoren verwendet werden, z.B. Azobisisobuttersäurenitril, Diacylperoxide, wie Dibenzoylperoxid oder Dilauroylperoxid, Perester, z.B. tert.-Butylperpivalat, tert.-Butylperoktoat, tert.-Butylperacetat oder tert.-Butylperbenzoat, Wasserstoffperoxid und Hydroperoxide, z.B. tert.-Butylhydroperoxid oder Cumolhydroperoxid.

Die Monomeren werden in bekannter Weise bei Temperaturen zwischen 40 und 160, vorzugsweise 45 bis 100°C polymerisiert. Die Polymerisation wird in der Regel bei Normaldruck vorgenommen. Gewöhnlich polymerisiert man beim Siedepunkt des Lösungsmittels bzw. der Lösungsmittelmischung. Die Polymerisationstemperatur kann dabei leicht durch eine geeignete Auswahl von Lösungsmitteln eingestellt werden. Die Polymerisation selbst kann kontinuierlich oder diskontinuierlich durchgeführt werden. Es ist beispielsweise möglich, die Monomerenlösung vorzulegen und einen oder mehrere Polymerisationsinitiatoren über einen längeren Zeitraum zuzudosieren oder Monomerenlösung und Polymerisationsinititiator kontinuierlich oder absatzweise einem Polymerisationsgefäß zuzuführen. Für die Polymerisation benötigt man z.B. 0,05 bis 1 Gew.%, bezogen auf die Monomeren eines Polymerisationsinitiators. Je Höher der Einsatz an Peroxid, desto niedriger sind die K-Werte des erhaltenen Polymerisats. Der K-Wert der so hergestellten Polymerisate liegt in dem Bereich von 10 bis 90.

Bei der Herstellung von Copolymerisaten aus N-Vinylpyrrolidon und Vinylacetat ist es besonders schwierig, den Restmonomerengehalt an Vinylacetat nach Beendigung der Hauptpolymerisation erheblich zu erniedrigen. Setzt man jedoch gemäß Erfindung die Dialkylperoxide Di-tert.-butylperoxid, Di-tert.-amylperoxid, Dicumylperoxid oder 2,5-Dimethyl-2,5-bis-(tert.-butylperoxy)-hexan oder die Perketale 2,2-Bis-(tert.-butylperoxy)-butan, 1,1-Bis-(tert.-butylperoxy)-3,3,5-trimethylcyclohexan, 4,4-Di-(tert.-butylperoxy)-n-iso- oder tert.-butylvalerat ein und erhitzt das Reaktionsgemisch auf eine Temperatur, die oberhalb der Temperatur bei der Hauptpolymerisationsreaktion liegt, so gelingt es überraschenderweise, die Restmonomerengehalte in der Polymersatlösung drastisch zu senken. Die Dialkylperoxide und Dialkylperketale werden in einer Menge von 0,05 bis 0,5 Gew.%, bezogen auf die ursprünglich eingesetzten Monomeren, verwendet. Es ist selbstverständlich auch möglich, Mischungen von 2 oder mehreren der genannten Peroxide bei der Nachpolymerisation einzusetzen, z.B. Mischungen aus Di-tert.-butylperoxid und Dicumylperoxid oder aus Di-tert.-butylperoxid und 2,2-Bis-(tert.-butylperoxy)-butan.

Die Nachpolymerisation wird vorzugsweise bei Temperaturen von 110 bis 160°C, durchgeführt. Aufgrund der bei der Hauptpolymerisation verwendeten Lösungsmittel kann es erforderlich sein, die Nachpolymerisation unter Drücken zwischen 1 und etwa 50 bar durchzuführen. Falls die Nachpolymerisation unter erhöhtem Druck vorgenommen wird, wählt man hierfür einen Bereich zwischen 2 und 7 bar. Die Zeit für die Nachpolymerisation beträgt zwischen 0,5 und 5 Stunden.

Die Erfindung wird anhand der folgenden Beispiele näher erläutert. Die in den Beispielen angegebenen Teile sind Gewichtsteile, die Angaben in Prozent beziehen sich auf das Gewicht der Stoffe. Die K-Werte, die in der Beschreibung und in den Beispielen angegeben sind, wurden nach H. Fikentscher, Cellulosechemie, 13, 58—64 und 71—74 (1932), in 5%igen Dimethylformamidlösungen bei 20°C bestimmt; dabei bedeutet $K = k \cdot 10^3$.

### Beispiele

In einem 40 l-Kessel, der mit Rührer, Rückflußkühler und einem Zulaufgefäß ausgestattet ist, werden 10% einer Lösung aus 6 kg N-Vinylpyrrolidon, 6 kg Vinylacetat, 12 kg Isopropanol und 36 g Azobisisobuttersäurenitril vorgelegt und auf eine Temperatur von 80°C erhitzt. Nach dem Beginn der Polymerisation gibt man die restliche Monomerenlösung in einem Zeitraum von etwa 5 Stunden zu. Die Hauptpolymerisation der Monomeren wird in einem Temperaturbereich von 72 bis 85°C unter schwachem Sieden durchgeführt. Nach einer Zeit von 5,5 Stunden liegt eine Polymerlösung vor, die 12,6% Vinylacetat und 2,4% N-Vinylpyrrolidon enthält.

Um den Restmonomerengehalt der erhaltenen Polymerisatlösung zu senken, werden die in der folgenden Tabelle angegebenen Polymerisationsinitiatoren gelöst in Isopropanol innerhalb einer Zeit von 0,5 Stunden zugegeben. Die Menge des zugesetzten Polymerisationsinitiators betrug jeweils 0,2%, bezogen auf die ursprünglich bei der Polymerisation eingesetzten Monomeren. Die Nachpolymerisation wird bei einer höheren Temperatur durchgeführt als die Hauptpolymerisation. Die Reaktionsbedingungen sowie die Gehalte an Restmonomeren in der Polymerisatlösung sind in der folgenden Tabelle angegeben.

Die Vergleichsbeispiele repräsentieren den Stand der Technik, der sich aus der US-PS 2 665 271 ergibt.

# 0 000 161

Tabelle

| Bsp. Nr. | Nachpolymerisations-Starter | Menge % | Zeit h | Temp. °C | Druk bar | Restmono. VAC % | Restmono. VP % |
|---|---|---|---|---|---|---|---|
| 1 | Di-tert.-butyl-peroxid | 0,2 | 4 | 140 | 4 | 0,02 | 0,01 |
| 2 | Di-tert.-amyl-peroxid | 0,2 | 4 | 140 | 4 | 0,003 | 0,009 |
| 3 | Dicumylperoxid | 0,2 | 4 | 130 | 3 | 0,06 | 0,003 |
| 4 | 2,5-Dimethyl-2,5-di-(tert.-butylperoxy)-hexan | 0,2 | 4 | 130 | 3 | 0,01 | 0,008 |
| 5 | 2,2-Bis-(tert.-butylperoxy)-butan | 0,2 | 4 | 130 | 3 | 0,09 | 0,009 |

| Vergl. bsp. Nr. | Nachpolymerisations-Starter | Menge % | Zeit h | Temp. °C | Druck bar | Restmono. VAC % | Restmono. VP % |
|---|---|---|---|---|---|---|---|
| 1 | Azobisisobuttersäurentril | 0,3 | 5 | 82 | Rückfl. | 3,2 | 0,4 |
| 2 | tert.-Butylperpivalat | 0,3 | 5 | 82 | Rückfl. | 0,44 | 0,005 |
| 3 | tert.-Butylperoktoat | 0,3 | 5 | 82 | Rückfl. | 0,36 | 0,006 |
| 4 | Azobisisobuttersäurenitril | 0,3 | 5 | 100 | 1 bar | 2,8 | 0,25 |
| 5 | tert.-Butylhydroperoxid | 0,3 | 5 | 130 | 3,8 bar | 3,4 | 0,55 |

**Patentansprüche**

1. Verfahren zur Reduzierung der Restmonomerengehalte bei der Homopolymerisation von N-Vinyllactamen bzw. der Mischpolymerisation von N-Vinyllactam und Vinylestern in einem Lösungsmittel durch Zusatz von Polymerisationsinitiatoren im Anschluß an die Hauptpolymerisation und Nachpolymerisieren des Reaktionsgemisches, dadurch gekennzeichnet, daß man die Hauptpolymerisation bei Temperaturen von 40 bis 160°C durchführt, dem Reaktionsgemisch nach Beendigung der Hauptpolymerisation 0,05 bis 0,5 Gew.%, bezogen auf die eingesetzten Monomeren, Di-tert.-butylperoxid, Di-tert.-amylperoxid, Dicumylperoxid, 2,5-Dimethyl-2,5-bis-(tert.-butylperoxy)-hexan, 2,2-Bis-(tert.-butylperoxy)-butan, 1,1-Bis-(tert.-butylperoxy)-3,3,5-trimethylcyclohexan oder 4,4-Di-(tert.-butylperoxy)-butylvalerat zusetzt, und die Nachpolymerisation bei höherer Temperatur als die Hauptpolymerisation im Bereich von 100 bis 200°C durchführt.

2. Verfahren gemäß den Ansprüchen 1 dadurch gekennzeichnet, daß die Hauptpolymerisation unter Normaldruck und die Nachpolymerisation bei Temperaturen von 110 bis 160°C unter einem Druck von 1 bis 50 bar durchgeführt wird.

3. Verfahren gemäß den Ansprüchen 1 oder 2 dadurch gekennzeichnet, daß als Vinyllactam N-Vinylpyrrolidon eingesetzt wird.

4. Verfahren gemäß den Ansprüchen 1 bis 3, dadurch gekennzeichnet, daß N-Vinylpyrrolidon und Vinylester copolymerisiert werden.

**Revendications**

1. Procédé pour réduire la teneur en monomères restants lors de l'homopolymérisation de N-vinyllactamen ou de la copolymérisation de N-vinyllactames et d'esters vinyliques dans un solvent par addition d'initiateurs de polymérisation à la suite de la polymérisation principale et postpolymérisation du mélange de réaction, caractérisé par le fait que l'on effectue la polymérisation principale à des températures de 40 à 160°C, on ajoute au mélange de réaction, après achèvement de la polymérisation principale, 0,05 à 0,5% en poids rapporté aux monomères introduits, de di-tert.-butylperoxyde, di-tert.-amylperoxyde, dicumylperoxyde, 2,5-diméthyl-2,5-bis-(tert.-butylperoxy)hexane, 2,2-bis-tert.-butylperoxy)-butane, 1,1-bis-(tert.-butylperoxy)-3,3,5-triméthylcyclohexane ou 4,4-di-(tert.-butylperoxy)-butylvalerate et on effectue la postpolymérisation à une température plus élevée que le polymérisation principale dans les limites de 100 à 200°C.

2. Procédé selon la revendication 1, caractérisé par le fait que l'on effectue la polymérisation principale sous pression normale et la post-polymérisation à des températures de 110 à 160°C sous une pression de 1 à 50 bars.

3. Procédé selon l'une des revendications 1 et 2, caractérisé par le fait que l'on introduit, comme vinyllactame, de la N-vinylpyrrolidone.

4. Procédé selon l'une des revendications 1 à 3, caractérisé par le fait qu'on copolymérise du N-vinylpyrrolidone et de l'ester vinylique.

## Claims

1. A process for reducing the residual monomer content in the homopolymerization of N-vinyl-lactams and in the copolymerization of N-vinyl-lactam and vinyl esters in a solvent, by adding a polymerization initiator subsequent to the main polymerization and after-polymerizing the reaction mixture, characterized in that the main polymerization is carried out at from 40 to 160°C, from 0.05 to 0.5% by weight, based on the monomers employed, of di-tert.-butyl peroxide, di-tert.-amyl peroxide, dicumyl peroxide, 2,5-dimethyl-2,5-bis-(tert.-butylperoxy)-hexane, 2,2-bis-(tert.-butyl peroxy)-butane, 1,1-bis-(tert.-butyl-peroxy)-3,3,5-trimethylcyclohexane or 4,4-di-(tert.-butyl-peroxy)-butyl valerate is added to the reaction mixture after completion of the main polymerization, and the after-polymerization is carried out at a higher temperature than the main polymerization in the range of from 100 to 200°C.

2. A process as claimed in claim 1, characterized in that the main polymerization is carried out under atmospheric pressure and the after-polymerization is carried out at from 110 to 160°C under a pressure of from 1 to 50 bars.

3. A process as claimed in claims 1 and 2, characterized in that N-vinylpyrrolidone is employed as the vinyl-lactam.

4. A process as claimed in claims 1 to 3, wherein N-vinylpyrrolidone and a vinyl ester are copolymerized.